Europäisches Patentamt

European Patent Office

Office européen des brevets

(19)

(11) EP 0 797 472 B1

(12) FASCICULE DE BREVET EUROPEEN

(45) Date de publication et mention
de la délivrance du brevet:
**06.10.1999 Bulletin 1999/40**

(21) Numéro de dépôt: **95942237.9**

(22) Date de dépôt: **11.12.1995**

(51) Int. Cl.[6]: **B01D 11/04**

(86) Numéro de dépôt international:
**PCT/FR95/01638**

(87) Numéro de publication internationale:
**WO 96/18445 (20.06.1996 Gazette 1996/28)**

(54) **PROCEDE DE SEPARATION DE COMPOSES LOURDS ET LEGERS, PAR EXTRACTION PAR UN FLUIDE SUPERCRITIQUE ET NANOFILTRATION**

VERFAHREN ZUR TRENNUNG VON SCHWEREN UND LEICHTEN VERBINDUNGEN DURCH EXTRAKTION MIT EINEM ÜBERKRITISCHEN FLUID UND DURCH NANOFILTRATION

PROCESS FOR SEPARATING HEAVY AND LIGHT COMPOUNDS BY EXTRACTION WITH A SUPERCRITICAL FLUID AND BY NANOFILTRATION

(84) Etats contractants désignés:
**CH DE DK ES GB IT LI NL SE**

(30) Priorité: **12.12.1994 FR 9414923**

(43) Date de publication de la demande:
**01.10.1997 Bulletin 1997/40**

(73) Titulaire:
**COMMISSARIAT A L'ENERGIE ATOMIQUE
75015 Paris (FR)**

(72) Inventeurs:
• **SARRADE, Stéphane
F-84100 Orange (FR)**
• **CARLES, Maurice
F-26700 Pierrelatte (FR)**
• **PERRE, Christian
F-26700 Pierrelatte (FR)**
• **VIGNET, Paul
F-84100 Orange (FR)**

(74) Mandataire:
**Des Termes, Monique et al
Société Brevatome
3, rue du Docteur Lanceraux
75008 Paris (FR)**

(56) Documents cités:
WO-A-92/06775        GB-A- 2 190 398
US-A- 5 160 044

• **DATABASE WPI Week 8733 Derwent
Publications Ltd., London, GB; AN 87-232797
XP002000861 & JP,A,62 158 223 (SHIN
NENRYOYU KAIHA , SHINNENRYOYU KAIHATSU
GIJUTSU) , 14 Juillet 1987**
• **DATABASE WPI Week 8936 Derwent
Publications Ltd., London, GB; AN 89-260219
XP002000862 & JP,A,01 189 301 (EBARA SOGO
KENKYUSH) , 28 Juillet 1989**
• **DATABASE WPI Week 9316 Derwent
Publications Ltd., London, GB; AN 93-130718
XP002000863 & JP,A,05 068 804 (CHLORINE
ENGINEERS CORP , OGAWA KORYO) , 23 Mars
1993**
• **DATABASE WPI Week 8729 Derwent
Publications Ltd., London, GB; AN 87-201919
XP002000864 & JP,A,62 129 102 (HITACHI) , 11
Juin 1987**

## Description

La présente invention a pour objet un procédé de séparation de composés lourds et légers à partir d'une phase solide ou liquide les contenant.

Un tel procédé peut trouver de nombreuses applications dans des domaines très divers tels que l'industrie alimentaire, par exemple pour le fractionnement de triglycérides issus du beurre ou d'huile de poissons, la séparation de biomolécules à haute valeur ajoutée telles que les vitamines, les colorants et les pigments, et l'industrie des polymères pour le fractionnement de polymères intéressant l'industrie de pointe tels que les silicones, etc.

Pour toutes ces applications, les produits de départ sont des phases solides ou liquides de composition complexe qui nécessitent l'emploi de nombreuses étapes de fractionnement pour parvenir à isoler les molécules intéressantes.

De façon plus précise, l'invention concerne l'utilisation conjointe des techniques d'extraction par fluide supercritique et des techniques de nanofiltration pour parvenir à extraire des molécules intéressantes de produits complexes.

En effet, les techniques d'extraction par fluide supercritique ont été utilisées jusqu'à présent pour extraire des composés intéressants à partir de produits solides ou liquides tels que des plantes, par exemple pour obtenir des extraits de parfum à partir de diverses plantes ou pour récupérer des principes actifs, comme il est décrit dans de nombreux documents parmi lesquels on peut citer l'ouvrage de E. Stahl "Extraction dense gases for extraction and refining" de 1987. Après l'opération d'extraction, on utilise l'extrait tel quel ou on le sépare par des procédés de distillation.

Les techniques de séparation par membrane ont été utilisées dans divers domaines tels que la séparation isotopique par diffusion gazeuse, le dessalement de l'eau de mer, la séparation de protéines etc.

On a réalisé certaines études sur la filtration de fluides supercritiques tels que $CO_2$, par exemple pour séparer le $CO_2$ supercritique de l'éthanol sur une membrane asymétrique en polyimide kapton, (Semenova et al... 1992), et pour séparer le $CO_2$ du polyéthylène glycol 400 sur des membranes en polyimide ou en SiO2 (Nakamura et al, "Membrane separation of supercritical fluid mixture" pp 820-822 in Developments in Food Engineering, Ed. par T.Yamo, R. Matsuno et K.Nakamura Blacku Academic & professional (Chapman & Hall) London, New York, Tokyo, 1994)

Ainsi, aucune étude n'a été effectuée sur l'emploi de la nanofiltration pour séparer sélectivement des solutés contenus dans un fluide supercritique.

Dans les techniques de nanofiltration, on utilise une membrane de nanofiltration qui retient les substances ayant un poids moléculaire supérieur au seuil de coupure de la membrane, situé dans la gamme des poids moléculaires allant de 50 à 1000 Daltons, mais qui laisse passer les substances ayant un poids moléculaire inférieur à ce seuil, pour séparer des substances en fonction de leur poids moléculaire. Cette propriété n'a jamais été utilisée avec des fluides supercritiques car dans toutes les études effectuées, les produits à séparer sont retenus par la membrane, même s'ils ont un poids moléculaire faible comme c'est le cas pour l'éthanol.

La présente invention a précisément pour objet un procédé de séparation de composés léger(s) et lourd(s) par extraction de tous les composés dans un fluide supercritique, suivie d'une séparation sur une membrane de nanofiltration.

Selon l'invention, le procédé pour séparer au moins un composé léger ayant une masse moléculaire de 50 à 1000 Daltons, d'au moins un composé lourd ayant une masse moléculaire plus élevée que celle du composé léger, à partir d'une phase solide ou liquide les contenant, se caractérise en ce qu'il comprend les étapes suivantes :

    a) mettre en contact ladite phase solide ou liquide avec un fluide supercritique à une pression $P_1$ supérieure à la pression critique $P_c$ du fluide et à une température $T_1$ supérieure à la température critique $T_c$ du fluide, pour extraire dans celui-ci les composés léger(s) et lourd(s) ;

    b) soumettre le fluide supercritique ayant extrait les composés à une filtration sur une membrane de nanofiltration, en appliquant de l'autre côté de la membrane une pression $P_2$ inférieure à $P_1$ mais supérieure à $P_c$, pour séparer le fluide supercritique en un courant de rétentat appauvri en composé(s) léger(s) et en un courant de perméat constitué de fluide supercritique enrichi en composé(s) léger(s) ; et

    c) récupérer le(s) composé(s) léger(s) du courant de perméat.

Dans ce procédé, on réalise donc en premier lieu, une extraction des composés légers et lourds dans un fluide supercritique en profitant ainsi du pouvoir solvant amélioré des fluides supercritiques, puis on sépare les composés voisins extraits dans ce fluide en fonction de leur masse moléculaire par nanofiltration au travers d'une membrane présentant des caractéristiques appropriées pour cette séparation.

L'utilisation conjointe de ces deux techniques permet d'obtenir une sélectivité accrue et la séparation de composés de structure et de masse moléculaire voisines.

Par rapport à la séparation simple par membrane de nanofiltration, l'utilisation d'un fluide supercritique comme fluide vecteur des composés à séparer permet une amélioration du transfert transmembranaire et de meilleures performances de séparation.

Par ailleurs, le fait d'associer une séparation par nanofiltration à l'extraction par fluide supercritique permet d'obtenir un gain énergétique non négligeable.

En effet, dans les processus d'extraction par fluide supercritique, il est nécessaire en fin d'opération d'effectuer une détente de la totalité du fluide utilisé pour l'extraction afin de séparer celui-ci à l'état gazeux des produits extraits qui restent à l'état liquide. Ceci nécessite un cout énergétique important car il est nécessaire de recomprimer ensuite la totalité du fluide supercritique utilisé pour le recycler dans l'installation d'extraction. Dans l'invention, en associant au processus d'extraction une séparation par nanofiltration, on peut récupérer le produit intéressant qui se trouve dans le perméat, en soumettant à la détente seulement une fraction du fluide supercritique utilisé pour la séparation.

Pour la mise en oeuvre du procédé de l'invention, on peut utiliser différents fluides supercritiques tels que $CO_2$, $N_2O$, $NO_2$, alcanes légers en $C_1$ à C6, CFC ou substituts de CFC, gaz rares, ammoniac, alcools légers en $C_1$ à $C_4$, $SF_6$ ; purs ou en mélanges.

Dans certains cas, il est nécessaire d'ajouter au fluide supercritique un cosolvant, tiers corps améliorant les qualités solvantes de l'ensemble. Comme solvant, on peut utiliser l'eau et les alcools légers en $C_1$ à $C_6$ à des teneurs comprises entre 0 et 10 %.

De préférence, on utilise du $CO_2$ supercritique qui présente l'avantage d'avoir une température critique Tc et une pression critique Pc peu élevées (31°C et 7,3MPa).

Dans le cas où on utilise comme fluide supercritique du $CO_2$ supercritique, la pression $P_1$ a avantageusement une valeur allant de 7,3 à 35MPa et la température $T_1$ a avantageusement une valeur de 31 à 120°C.

De préférence $P_1$ est supérieur à 10 MPa pour obtenir un rendement d'extraction plus élevé en raison du pouvoir solvant amélioré du fluide aux pressions élevées.

Dans l'étape de séparation par nanofiltration, on applique une pression $P_2$ inférieure à $P_1$ mais supérieure à Pc, qui est choisie en fonction des composés à séparer de façon à avoir une sélectivité élevée des composés légers par rapport aux composés lourds. Généralement la pression $P_2$ est telle que $(P_1 - P_2)$ se situe dans l'intervalle de 1 à 5 MPa.

Pour récupérer les composés légers du courant de perméat, on peut effectuer une détente de ce courant de perméat à une pression $P_3$ inférieure à $P_c$ afin d'éliminer le fluide supercritique à l'état gazeux et de le séparer du (des) composé(s) léger(s) qui restent à l'état liquide.

Les membranes de nanofiltration utilisées dans le procédé de l'invention peuvent être de différents types à condition qu'elles présentent un seuil de coupure situé dans la gamme des poids moléculaires allant de 50 à 1000 Daltons.

Ces membranes qui peuvent être organiques, minérales ou organominérales, doivent présenter une résistance "globale" (mécanique, thermique, structurelle, chimique...) adaptée au milieu particulier du fluide supercritique utilisé.

Les membranes organominérales sont des nanofiltres asymétriques composites qui comportent un support macroporeux en matériau inorganique, par exemple en alumine, revêtu d'une couche active en matériau organique tel qu'un polymère, avec interposition éventuelle entre le support et la couche active d'une couche mésoporeuse en matériau inorganique, par exemple en $TiO_2$.

Des membranes organominérales de ce type sont décrites dans WO-A-92/06775.

De telles membranes comprennent un support poreux en substance inorganique revêtu sur une face

- d'une première couche mésoporeuse en matériau inorganique ayant un rayon moyen de pore inférieur à 10nm, et
- d'une seconde couche active disposée sur la première couche mésoporeuse, ayant une épaisseur de 0,1 à 1µm, réalisée en polymère organominéral ou en polymère organique choisi dans le groupe comprenant les polysulfones sulfonées, les polybensimidazonones, les polyfluorures de vinylidène greffés par du méthacrylate de diaminoéthyle et les ionomères perfluorés.

De préférence, on utilise des membranes organominérales à support macroporeux en $Al_2O_3\alpha$, revêtu d'une couche mésoporeuse d'oxyde de titane et d'une couche en ionomère perfluoré tel que le Nafion[®], car elles présentent une perméabilité au $CO_2$ supercritique assez grande pour obtenir un courant de perméat assez élevé.

Le procédé décrit ci-dessus peut être mis en oeuvre dans une installation comprenant :

- un extracteur apte à recevoir une phase solide ou liquide contenant les composés à extraire,
- un dispositif de nanofiltration comportant au moins une membrane de nanofiltration,
- des moyens pour faire circuler un fluide supercritique successivement dans l'extracteur et dans le dispositif de nanofiltration,
- des moyens pour récupérer à la sortie du dispositif de nanofiltration un courant de perméat contenant une partie des composés extraits et un courant de rétentat contenant l'autre partie des composés extraits,
- des moyens pour séparer du courant de rétentat les produits extraits totalement ou partiellement et recycler dans l'extracteur le fluide supercritique à l'état pur ou chargé d'une partie résiduelle des composés dissous, et

- des moyens pour séparer du courant de perméat les produits extraits.

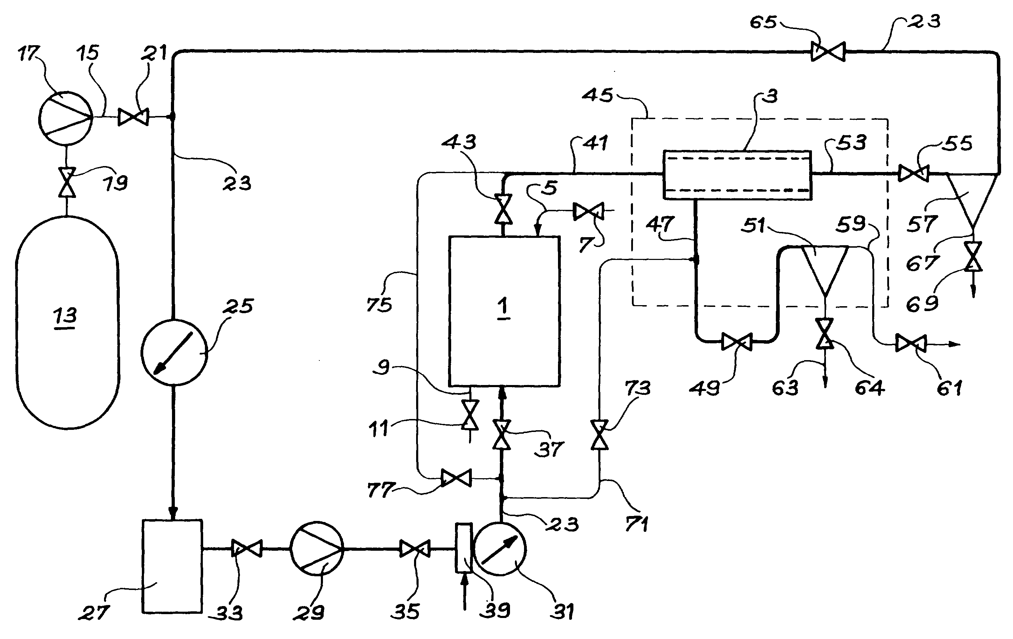

D'autres caractéristiques et avantages de l'invention apparaîtront mieux à la lecture de la description qui suit, donnée bien entendu à titre illustratif et non limitatif, en référence au dessin annexé.

La figure annexée est une représentation schématique d'une installation de mise en oeuvre du procédé de l'invention.

En se reportant à la figure, on peut voir que l'installation de mise en oeuvre du procédé de l'invention comprend comme constituants principaux l'extracteur (1) et le module de nanofiltration (3).

On peut introduire dans l'extracteur (1) la phase solide ou liquide qui constitue le produit de départ du procédé de l'invention, par une conduite (5) munie d'une vanne (7), les produits résiduels pouvant être éliminés en fin d'opération par la conduite (9) munie d'une vanne (11).

Le fluide supercritique peut être introduit dans l'extracteur (1) à partir d'un réservoir de stockage (13) par l'intermédiaire de la conduite (15) munie d'une pompe (17) et de deux vannes (19) et (21), dans un circuit (23) comprenant un premier échangeur de chaleur (25), un volume tampon (27), une deuxième pompe (29), un deuxième échangeur de chaleur (31) et des vannes (33, 35 et 37). Sur ce circuit d'alimentation en fluide supercritique, est également prévu un injecteur (39) en amont de ce second échangeur (31).

A la sortie de l'extracteur (1) le fluide supercritique ayant extrait les composés lourds et légers sort par une conduite (41) munie d'une vanne (43) pour être dirigé dans le module de nanofiltration (3) qui est maintenu à la température voulue par une étuve (45). Dans ce module de nanofiltration, l'alimentation en fluide chargé de composés lourds et légers se sépare en un courant de perméat ayant traversé les membranes de nanofiltration qui est évacué par la conduite (47) munie de la vanne de détente (49) vers un séparateur (51), et un courant de rétentat qui est évacué par la conduite (53) munie de la vanne de détente (55) vers un séparateur (57).

Dans le premier séparateur (51), on sépare le courant de perméat supercritique en fluide à l'état gazeux qui est évacué par la conduite (59) munie d'une vanne de détente (61), et en un produit liquide correspondant au(x) composé(s) léger(s) qui est évacué par la conduite (63) munie d'une vanne (64).

Dans le séparateur (57) le courant de rétentat supercritique est séparé en fluide à l'état gazeux ou supercritique qui est recyclé dans le circuit d'alimentation (23) en fluide supercritique ou gazeux muni de la vanne (65) et en composé(s) lourd(s) qui sont évacués par la conduite (67) munie d'une vanne (69).

Cette installation comprend de plus une conduite (71) munie d'une vanne (73) pour mettre à la pression voulue le circuit de perméat, et une conduite (75) munie d'une vanne (77) pour régénérer le module de nanofiltration sans passer dans l'extracteur (1).

Dans cette installation on a un circuit fonctionnant sous haute pression entre la pompe (29) et le module de nanofiltration (3), des circuits basse pression qui correspondent au circuit de perméat (47), et des circuits moyennes ou basses pressions correspondant au circuit de rétentat (53) et au circuit (23) dans sa partie recyclage et sa partie alimentation jusqu'à la pompe (29).

Le module de nanofiltration 3 utilisé dans cette installation peut comprendre plusieurs membranes de nanofiltration.

Généralement, on utilise des membranes tubulaires assemblées en faisceau entre deux plaques support ; la couche active de ces membranes étant la couche interne, et on fait circuler le fluide supercritique à la pression $P_1$ à l'intérieur des membranes tubulaires.

Le fonctionnement de cette installation est le suivant.

On introduit tout d'abord dans l'extracteur (1) la phase solide ou liquide à traiter par la conduite (5). Après fermeture de la vanne (7), les vannes (37, 43, 49 et 55) étant fermées, on ouvre les vannes (33, 35, 73 et 77) et on fait circuler le fluide issu du réservoir (13), par exemple du $CO_2$, à l'état liquide dans la conduite (23) jusqu'à la pompe (29) où on le comprime jusqu'à la pression $P_2$ désirée du côté perméat de façon à permettre l'équilibrage rapide des pressions de part et d'autre des membranes du module de nanofiltration. Lorsque la pression $P_2$ est atteinte, on ferme la vanne (73) et on continue de faire monter la pression dans la conduite (75) jusqu'à atteindre la valeur $P_1$, pour créer la différence de pression nécessaire au bon fonctionnement du module de nanofiltration.

Lorsque la montée en pression est achevée, on ferme la vanne (77) et on ouvre les vannes (37, 43, 49, 55, 61 et 65) pour faire circuler le fluide supercritique dans l'extracteur (1), puis dans le module de nanofiltration (3). On obtient ainsi un fractionnement du fluide chargé sortant de l'extracteur (1) en un courant de perméat dont les composés légers sont séparés dans le séparateur (51), le gaz carbonique étant rejeté à l'état gazeux, et un courant de rétentat séparé dans le séparateur (57) en composés lourds et en $CO_2$ recyclé dans le circuit (23).

En fin d'opération, on isole l'extracteur par fermeture des vannes (37) et (43) et on ouvre la vanne (77) pour faire circuler du $CO_2$ pur sur la membrane afin de la régénérer.

Un appoint de gaz carbonique est introduit dans le circuit d'alimentation (23) de l'extracteur (1) par la conduite (15) en réglant de façon appropriée l'ouverture des vannes (19 et 21) et la pompe (17) en fonction du gaz carbonique évacué dans l'atmosphère par la conduite (59).

Dans cette installation, l'étuve (45) permet de maintenir le module de nanofiltration à la température $T_1$ (31 à 120°C) et la pompe (29) permet de véhiculer le $CO_2$ à un débit de 5 à 30kg/h. L'échangeur (31) amène la température du fluide à la température $T_1$, l'échangeur 25 assurant seulement un préchauffage à une température inférieure à $T_1$, par exemple à 10°C.

On peut bien entendu effectuer des prises d'échantillons sur les conduites (63) et (69) en vue d'analyser les produits obtenus. On peut aussi, si nécessaire, recycler les produits recueillis dans les conduites (63) et (69) dans l'extracteur (1) par un ensemble thermostaté de conduites non représentées sur le dessin, en les introduisant par l'injecteur (39). On peut aussi introduire par l'injecteur (39) d'autres produits, par exemple un cosolvant dans le cas où cela serait nécessaire,

Pour vérifier les performances de cette installation, on détermine les perméabilités de la membrane de nanofiltration et on analyse les produits recueillis dans les séparateurs 51 et 57. La perméabilité au $CO_2$ pur peut être déter-minée à partir de mesures de débit effectuées à l'aide d'un compteur à gaz et d'un chronomètre sur le circuit (47) du perméat.

En fonctionnement, on peut effectuer la même mesure de perméabilité, toutes les 15 min., pendant toute la durée de l'opération.

L'analyse des produits recueillis en 63 et 67 peut être effectuée, par exemple, par chromatographie pour déterminer la masse de produit recueilli.

On peut ainsi en déduire le taux de rétention $R_c$(%) de la membrane pour un composé, qui est exprimé par la formule suivante :

$$R_c(\%) = [1-(C_{pc}/C_{rc})] \times 100$$

dans laquelle Cpc représente le rapport de la masse du composé c dans le perméat sur la masse de $CO_2$ qui a traversé la membrane et est exprimé en g de composé/kg de $CO_2$, et

$C_{rc}$ représente le rapport massique du composé c dans le rétentat, c'est-à-dire le rapport de la masse du composé c dans le rétentat sur la masse de $CO_2$ entré dans le module de nanofiltration.

A partir des analyses, on peut aussi déterminer le facteur de sélectivité $\alpha$ qui est destiné à évaluer l'efficacité de séparation d'un composé $c_1$ par rapport à un composé $c_2$. Il est déterminé à partir de la formule suivante :

$$\alpha_{c1}/c_2 = (C_{pc1}/C_{pc2})/(C_{rc1}/C_{rc2})$$

Lorsque ce facteur est supérieur à l'unité, cela signifie que le perméat s'est enrichi en composé $c_1$ et qu'il y a donc eu passage préférentiel de ce composé à travers la membrane.

Les exemples qui suivent illustrent les résultats obtenus en mettant en oeuvre le procédé de l'invention.

Dans tous ces exemples, on utilise $CO_2$ comme fluide supercritique et un module de nanofiltration comportant des membranes organominérales tubulaires d'une longueur de 15,5 cm, d'un diamètre interne de 0,7 cm et de 0,8 cm de diamétre externe. Elles comportent un support en $Al_2O_3\alpha$, une couche mésoporeuse en oxyde de titane et une couche finale active externe en Nafion®. Les trois membranes utilisées TN 261, TN 288, TN 292 présentent les caractéristiques suivantes :

Support en alumine $\alpha$ d'épaisseur 1 mm
Sous couche en TIO2 d'épaisseur 1 $\mu$m
Couche active en Nafion d'épaisseur 0,1$\mu$m

Dans les exemples qui vont être décrit, on étudie les performances du procédé de l'invention sur les polyéthylène glycols. Ces polyéthylène glycols PEG ont pour formule générale $H-(OCH_2-CH_2)_n-OH$ et leurs masses moléculaires sont fonction du degré de polymérisation n. On utilise dans ces exemples des PEG ayant respectivement des masses moléculaires (Mw) de 200 (PEG 200), 400 (PEG 400) et 600 Daltons (PEG 600) ou l'éthylène glycol.

Les caractéristiques de ces produits sont présentées dans le tableau 1 qui suit.

Pour effectuer cette séparation, on introduit dans l'extracteur (1) 200 ou 300g des produits à séparer dans une phase stationnaire d'appoint constituée de silice diatomée représentant 1/3 du mélange de PEG, soit 300g de mélange de PEG et 150g de dicalite ou 200 g de mélange et 100 g de dicalite. Dans le cas du mélange contenant du PEG 600, celui-ci est préalablement fondu au bain marie à 50°C.

**Exemples 1 à 3** : Etude de la composition du mélange de deux polyéthylène glycols de masse moléculaire différente entrant dans la membrane.

On utilise comme membrane de nanofiltration, la membrane TN 261, et on réalise l'extraction en faisant circuler le $CO_2$ supercritique à la pression $P_1$ et à la température $T_1$ données dans le tableau 2 qui suit, en maintenant une différence de pression ($P_1$ - $P_2$) entre le côté rétentat $P_1$ et le côté perméat $P_2$ de 3 MPa.

On détermine dans un premier temps la composition de l'extrait contenu dans le $CO_2$ entrant dans la membrane, en fonction de $P_1$ et $T_1$.

Les résultats obtenus sont également donnés dans le tableau 2. Ils permettent d'optimiser les conditions de températures $T_1$ et de pression $P_1$ pour que la composition de l'extrait extrait soit parfaitement connue et relativement bien équilibrée en PEG 200 et 600

**Exemples 4 à 7** : Séparation éthylène glycol, polyéthylène glycol 400.

Dans ces exemples, on suit le même mode opératoire que dans l'exemple 1 avec la membrane TN 288, et on réalise l'extraction à une température $T_1$ de 60°C et une pression $P_1$ de 31MPa. On applique de l'autre côté de la membrane de nanofiltration une pression $P_2$ qui varie de 27 à 30MPa.

Les résultats obtenus sont donnés dans le tableau 3 qui suit.

Les résultats de ce tableau montrent que la sélectivité $\alpha_{EG/PEG}$400 dépend de la différence de pression $P_1$-$P_2$. Ainsi, pour une différence de pression de 1MPa, l'éthylène glycol traverse la membrane plus facilement que le PEG, le perméat est alors plus riche en éthylène glycol que le rétentat. En revanche, a partir d'une différence de pression de 2MPa, la sélectivité est proche de l'unité, donc la membrane n a pas joué son rôle de barrière sélective puisqu'elle présente la même perméabilité pour les deux solutés. Ceci est dû au fait que les deux composés ont une masse moléculaire faible par rapport aux possibilités de rétention de la membrane (seuil de 500 à 1000 Daltons).

**Exemples 8 à 11** : Séparation de mélanges de polyéthylène glycol 200 et 600.

Dans ces exemples, on utilise comme membrane de nanofiltration, la membrane TN 261 en opérant à une pression $P_1$ de 31MPa et une température $T_1$ de 60°C avec une différence de pression $P_1$-$P_2$ variant de 1 à 4 MPa.

On détermine comme précédemment les quantités de composé récupérées dans le perméat et le rétentat, ainsi que les rapports massiques en composé dans le perméat Cp, dans le rétentat Cr, le taux de rétention R et la sélectivité $\alpha$ PEG 200/PEG 600.

Les résultats obtenus sont donnés dans le tableau 4, montrant que l'optimum de sélectivité ($\alpha$ le plus grand) se situe entre 2 et 3 MPa de $\Delta$P.

**Exemples 12 à 15.**

Dans ces exemples, on suit le même mode opératoire que dans les exemples 8 à 11 mais on utilise comme membrane de nanofiltration la membrane TN 288, en appliquant une différence de pression $P_1$-$P_2$ allant de 1 à 4 MPA.

Les résultats obtenus sont donnés dans le tableau 5.

Les résultats des tableaux 4 et 5 montrent que le facteur d'enrichissement- augmente avec la différence de pression appliquée jusqu'à une valeur limite de 4MPa,l'optimum étant obtenu pour une différence de pression de 2MPa pour la membrane TN 288 et de 3MPa pour la membrane TN 261. Pour une différence de pression de 4MPa, il semble que la force motrice appliquée soit trop importante et entraîne un passage forcé des deux composés dans le courant de perméat.

Il est donc important de limiter la différence de pression $P_1$-$P_2$ à une valeur faible pour obtenir une séparation optimale.

**Exemple 16** : Fractionnement des triglycérides.

Dans cet exemple, on traite du beurre pour en fractionner les triglycérides.

On sait qu'une forte demande industrielle existe concernant l'élaboration de produits allégés en lipides et en cholestérol.

Le beurre est une émulsion d'huile dans l'eau dont la composition moyenne est la suivante :

- protéines : 0,7 à 1%
- lipides : 81 à 83%
- glucides : 0,3 à 1%

- sels minéraux : 0,1 à 0,3%
- eau : 15 à 17%.

Les lipides du beurre sont constitués essentiellement de triglycérides (97,5% en masse), le cholestérol représentant 0,31% en masse. Les triglycérides sont formés d'acides gras contenant entre 4 et 54 atomes de carbone. 75% d'entre eux sont saturés et forment les acides gras à chaîne longue, principalement l'acide palmitique (20 à 30%) et l'acide stéarique (10%), et les acides gras à chaîne courte, de 4 à 10 atomes de carbone (10%) dont 1/3 d'acide butyrique. Le beurre contient aussi du cholestérol à la concentration de 250mg pour 100g.

Selon l'invention, on réalise l'extraction des triglycérides du beurre par du $CO_2$ supercritique a une pression $P_1$ de 31MPa, une température $T_1$ de 40°C et une pression $P_2$ de 28MPa. Pour l'extraction, on introduit dans l'extracteur (1) 200g de beurre et 60g de silice diatonée et on effectue l'extraction puis la séparation sur membrane de nanofiltration, pendant 1h, avec un débit d'alimentation de $CO_2$ égal à 20kg/h en utilisant comme membrane de nanofiltration la membrane TN 292.

On analyse en fin d'opération les extraits récupérés dans les séparateurs (51 et 57) par chromatographie en phase gazeuse.

Dans ce but, on fond les extraits au bain marie, puis on les centrifuge pendant 10min à 2500 tours/min, on élimine le culot blanc et on recueille l'extrait anhydre. On met ensuite en solution 300mg d'extrait anhydre dans 1ml d'isooctane, puis on injecte 1ml de la solution dans le gaz vecteur (hydrogène) d'un chromatographe en phase gazeuse comprenant une colone capillaire de type C18, et on détecte les produits séparés au moyen d'un détecteur à ionisation de flamme.

Les résultats obtenus sur le rétentat et sur le perméat sont donnés dans le tableau 6.

Dans ce tableau, on a donné également le rapport $\beta$ qui correspond au rapport du triglycéride considéré dans le perméat sur le même triglycéride dans le rétentat. Lorsque $\beta$ est inférieur à 1, le triglycéride est retenu par la membrane.

Les résultats du tableau 6 montrent que le rapport $\beta$ est supérieur à 1 pour les triglycérides inférieurs à C40 groupe de composés dont fait également parti le cholestérol.

**Exemple 18** : <u>Séparation des triglycérides dans l'huile de poisson.</u>

L'huile de poisson est principalement constituée de triglycérides contenant des acides gras de longueur de chaîne et de degré de saturation différents avec toutefois 75 à 90% d'acides gras saturés. Cette huile animale est très riche en acides gras très longs (nombre d'atomes de carbone supérieur à 18) certains saturés, d'autres très insaturés. Ces derniers (acides gras $\omega$ 3) auraient des effets favorables sur la santé humaine. C'est le cas notamment des acides éïcosapentaénoïque (C20:5) ou EPA, et docosahexanoïque (C22:6) ou DHA, qui en induisant une limitation de l'agrégation plaquettaire et un abaissement du taux de lipoprotéines préviendraient les maladies cardiovasculaires.

Il est donc intéressant d'obtenir à partir de l'huile de poisson une fraction riche en triglycérides à longues chaînes contenant significativement EPA et DHA.

Pour réaliser l'extraction des triglycérides de l'huile de poisson, on opère dans les mêmes conditions que celles de l'exemple 16 en utilisant la même membrane de nanofiltration.

Les résultats obtenus sont donnés dans le tableau 7.

Par ailleurs, le rapport bêta est supérieur à l'unité jusqu'à C54, donc les triglycérides supérieurs à C54 traversent difficilement la membrane.

Ce procédé permet donc de séparer l'huile de poisson en une fraction lourde de triglycérides dont le nombre de carbone est de 54 à 62 en opérant de la façon suivante.

A partir d'une charge de 20kg d'huile de poisson contenant 50% (10kg) de fraction lourde, on obtient au bout d'une heure de traitement, 0,5kg de perméat contenant 45% (0,225kg) de fraction lourde et 15kg de rétentat contenant 58% (8,7kg) de cette même fraction. La surface membranaire nécessaire à cette opération est de $0,3m^2$, c'est-à-dire 1,5 fois la surface d'échange d'une membrane multicanaux commerciale.

TABLEAU 1

| Produits | Viscosité cinématique à 98,9°C (Stokes) | Température de fusion (°C) |
|---|---|---|
| Ethylène glycol (Mw=62,07 Daltons) | | |
| PEG 200 | 0,043 | - 65 |
| PEG 400 | 0,073 | - 6 |

TABLEAU 1 (suite)

| Produits | Viscosité cinématique à 98,9°C (Stokes) | Température de fusion (°C) |
|---|---|---|
| PEG 600 | 0,105 | 22 |

TABLEAU 2

| EX | Composés | Charge | Composition de l'extrait entrant (%) | $P_1$ (MPa) | $T_1$ (°C) |
|---|---|---|---|---|---|
| 1 | PEG 200 | 100 g | 100 | 21 | 80 |
|   | PEG 600 | 100 g | 0 |   |   |
| 2 | PEG 200 | 100 g | 80, 7 | 21 | 60 |
|   | PEG 600 | 200 g | 18,9 |   |   |
| 3 | PEG 200 | 100 g | 56,3 | 31 | 60 |
|   | PEG 600 | 200 g | 43,7 |   |   |

TABLEAU 3

| EX | $P_1$-$P_2$ (MPa) | Composés | Rendement d'extraction (%massique) | Extrait perméat (g) | Extrait rétentat (g) | Cp (g.kg$^{-1}$) | Cr (g.kg$^{-1}$) | R (%) | $\alpha$ EG/PEG400 (-) |
|---|---|---|---|---|---|---|---|---|---|
| 4 | 1 | EG | 0,32 | 3,1 | 69,08 | 2,49 | 3,11 | 19,9 | 1,4 |
|   |   | PEG 400 | 0,32 | 2,2 | 68 | 1,75 | 3,06 | 42,8 |   |
| 5 | 2 | EG | 0,38 | 2,8 | 80 | 2,91 | 3,67 | 20,7 | 1 |
|   |   | PEG 400 | 0,36 | 2,7 | 76,5 | 2,82 | 3,51 | 19,7 |   |
| 6 | 3 | EG | 0,35 | 4,72 | 72,4 | 2,59 | 3,32 | 22 | 1 |
|   |   | PEG 400 | 0,30 | 4,19 | 61,06 | 2,30 | 2,80 | 17,9 |   |
| 7 | 4 | EG | 0,43 | 9,51 | 61,24 | 3,16 | 3,8 | 16,3 | 1 |
|   |   | PEG 400 | 0,35 | 7,25 | 48,83 | 2,41 | 3,03 | 20,5 |   |

TABLEAU 4

| EX | $P_1$-$P_2$ (MPa) | Composés | Rende-ment d'extrac-tion (% massique) | Extrait perméat (g) | Extrait rétentat (g) | Cp (g.kg$^{-1}$) | Cr (g.kg$^{-1}$) | R (%) | $\alpha$ PEG200/600 (-) |
|---|---|---|---|---|---|---|---|---|---|
| 8 | 1 | PEG 200 | 0,32 | 1,18 | 95,09 | 3,17 | 3,14 | <0 | 1,1 |
|   |   | PEG 600 | 0,27 | 0,91 | 80,24 | 2,44 | 2,65 | 8 |   |
| 9 | 2 | PEG 200 | 0,35 | 2 | 87,22 | 5 | 3,38 | <0 | 1,6 |
|   |   | PEG 600 | 0,33 | 1,2 | 83,87 | 3 | 3,25 | 7,7 |   |
| 10 | 3 | PEG 200 | 0,28 | 2,37 | 67,12 | 2,73 | 2,70 | <0 | 1,5 |
|   |   | PEG 600 | 0,23 | 1,33 | 55,79 | 1,53 | 2,22 | 31,1 |   |
| 11 | 4 | PEG 200 | 0,34 | 4,82 | 82,27 | 4,02 | 3,23 | <0 | 1,35 |
|   |   | PEG 600 | 0,25 | 2,68 | 61,89 | 2,23 | 2,43 | 8,2 |   |

TABLEAU 5

| EX | $P_1$-$P_2$ (MPa) | Composés | Rende-ment d'extrac-tion (%massi-que) | Extrait perméat (g) | Extrait rétentat (g) | Cp (g.kg$^{-1}$) | Cr (g.kg$^{-1}$) | R (%) | $\alpha$ PEG200/600 (-) |
|---|---|---|---|---|---|---|---|---|---|
| 12 | 1 | PEG 200 | 0,3 | 1,35 | 86,39 | 2,27 | 2,95 | 23,1 | 1,2 |
|   |   | PEG 600 | 0,15 | 0,55 | 43,93 | 0,93 | 1,5 | 38 |   |
| 13 | 2 | PEG 200 | 0,3 | 2,1 | 54,43 | 1,78 | 2,89 | 38,4 | 1,4 |
|   |   | PEG 600 | 0,18 | 0,9 | 32,77 | 0,76 | 1,74 | 56,3 |   |
| 14 | 3 | PEG 200 | 0,32 | 1,98 | 58,25 | 2,2 | 3,1 | 42,9 | 1,4 |
|   |   | PEG 600 | 0,21 | 0,94 | 38,9 | 1,04 | 2,07 | 49,8 |   |
| 15 | 4 | PEG 200 | 0,34 | 3,23 | 89,1 | 2,69 | 3,31 | 18,7 | 1 |
|   |   | PEG 600 | 0,32 | 2,92 | 82,64 | 2,43 | 3,07 | 20,8 |   |

TABLEAU 6

| Extrait Perméat (g) | Extrait Rétentat (g) | Triglycérides : Nombre d'atome de carbone | Composition Per-méat (%) | Composition Réten-tat (%) | $\beta$ |
|---|---|---|---|---|---|
| 10,4 | 147, 7 | 28 | 1,12 | 0,85 | 1,32 |
|   |   | 30 | 1,60 | 1,38 | 1,16 |
|   |   | 32 | 3,19 | 2,75 | 1,16 |

TABLEAU 6 (suite)

| Extrait Perméat (g) | Extrait Rétentat (g) | Triglycérides : Nombre d'atome de carbone | Composition Perméat (%) | Composition Rétentat (%) | β |
|---|---|---|---|---|---|
| | | 34 | 12,12 | 11,29 | 1,07 |
| | | 36 | 15,71 | 14,62 | 1,07 |
| | | 38 | 12,68 | 12,91 | 0,98 |
| | | 40 | 10,25 | 10,26 | 1,00 |
| | | 42 | 5,68 | 5,76 | 0,99 |
| | | 44 | 7,06 | 7,42 | 0,95 |
| | | 46 | 7,20 | 8,23 | 0,87 |
| | | 48 | 9,20 | 9,62 | 0,96 |
| | | 50 | 7,16 | 7,87 | 0,91 |
| | | 52 | 3,25 | 3,45 | 0,94 |
| | | 54 | 3,45 | 3,49 | 0,99 |

TABLEAU 7

| Extrait Perméat (g) | Extrait Rétentat (g) | Triglycérides : Nombre d'atome de carbone | Composition Perméat (%) | Composition Rétentat (%) | β |
|---|---|---|---|---|---|
| 4,2 | 146,7 | 36 | 0,90 | 0,04 | 22,50 |
| | | 38 | 1,20 | 0,39 | 3,08 |
| | | 40 | 1,08 | 0,57 | 1,89 |
| | | 42 | 1,49 | 0,50 | 2,98 |
| | | 44 | 2,59 | 0,80 | 3,24 |
| | | 46 | 4,92 | 1,87 | 2,63 |
| | | 48 | 9,65 | 7,44 | 1,30 |
| | | 50 | 17,85 | 15,56 | 1,15 |
| | | 52 | 22,38 | 21,29 | 1,05 |
| | | 54 | 24,02 | 22,82 | 1,05 |
| | | 56 | 8,29 | 17,86 | 0,46 |
| | | 58 | 3,96 | 8,69 | 0,46 |
| | | 60 | 1,13 | 1,99 | 0,57 |
| | | 62 | 0,01 | 0,05 | 0,20 |

**Revendications**

1. Procédé pour séparer au moins un composé léger ayant une masse moléculaire de 50 à 1000 Daltons, d'au moins un composé lourd ayant une masse moléculaire plus élevée que celle du composé léger, à partir d'une phase solide ou liquide les contenant, caractérisé en ce qu'il comprend les étapes suivantes :

a) mettre en contact ladite phase solide ou liquide avec un fluide supercritique à une pression $P_1$ supérieure à

la pression critique $P_c$ du fluide et à une température $T_1$ supérieure à la température critique $T_c$ dudit fluide pour extraire dans celui-ci les composés lourd(s) et léger(s) ;

b) soumettre le fluide supercritique ayant extrait les composés à une filtration sur une membrane de nanofiltration, en appliquant de l'autre côté de la membrane, une pression $P_2$ inférieure à $P_1$ et supérieure à Pc, pour séparer le fluide supercritique en un courant de rétentat appauvri en composé(s) léger(s) et un courant de perméat constitué de fluide supercritique enrichi en composé(s) légers(s) ;

c) récuper le(s) composé(s) léger(s) du courant de perméat.

**2.** Procédé selon la revendication 1, caractérisé en ce que le fluide supercritique est du $CO_2$ supercritique.

**3.** Procédé selon la revendication 2, caractérisé en ce que $P_1$ a une valeur allant de 7,3 à 35MPa, et $T_1$ a une valeur allant de 31 à 120°C.

**4.** Procédé selon l'une quelconque des revendication 2 et 3, caractérise en ce que $P_1$ - $P_2$ est dans l'intervalle allant de 1 à 5MPa.

**5.** Procédé selon l'une quelconque des revendications 1 à 4, caractérisé en ce que l'on récupère le(les) composé(s) léger(s) du courant de perméat par détente à une pression $P_3$ inférieure à Pc afin d'éliminer le fluide supercritique à l'état gazeux et le séparer du(des) composé(s) léger(s) restant à l'état liquide.

**6.** Procédé selon l'une quelconque des revendications 1 à 5, caractérisé en ce que la membrane de nanofiltration est une membrane organominérale comportant un support poreux en substance inorganique revêtu sur une face

- d'une première couche mésoporeuse en matériau inorganique ayant un rayon moyen de pore inférieur à 10m, et
- d'une seconde couche active disposée sur la première couche mésoporeuse, ayant une épaisseur de 0,1 à 1μm, réalisée en polymère organominéral ou en polymère organique choisi dans le groupe comprenant les polysulfones sulfonées, les polybensimidazonones, les polyfluorures de vinylidène greffés par du méthacrylate de diaminoéthyle et les ionomères perfluorés.

**7.** Procédé selon l'une quelconque des revendications 2 à 6, caractérisé en ce que les composés lourd(s) et léger(s) sont des polyéthylène glycols de masse moléculaire différente.

**8.** Procédé selon l'une quelconque des revendications 2 à 6, caractérisé en ce que la phase de départ est du beurre ou une huile de poisson et en ce que les composés à fractionner sont des triglycérides ou acides gras à longues chaînes.

## Claims

**1.** Process for separating at least one light compound having a molecular weight from 50 to 1000 Daltons, from at least one heavy compound having a higher molecular weight than that of the light compound, from a solid or liquid phase containing them, characterized in that it comprises the following stages:

a) contacting said solid or liquid phase with a supercritical fluid at a pressure $P_1$ higher than the critical pressure $P_c$ of the fluid and at a temperature $T_1$ higher than the critical temperature $T_c$ of said fluid in order to extract therein the heavy and light compounds,

b) subjecting the supercritical fluid which has extracted the compounds to a filtration on a nanofiltration membrane, applying from the other side of the membrane a pressure $P_2$ lower than $P_1$ and higher than $P_c$, in order to separate the supercritical fluid into a light compound-depleted retentate flow and a permeate flow constituted by light compound-enriched supercritical fluid,

c) recovering the light compound or compounds from the permeate flow.

**2.** Process according to claim 1, characterized in that the super-critical fluid is supercritical $CO_2$.

**3.** Process according to claim 2, characterized in that $P_1$ has a value from 7.3 to 35 MPa and $T_1$ a value from 31 to 120°C.

**4.** Process according to either of the claims 2 and 3, characterized in that $P_1$-$P_2$ is in the range 1 to 5 MPa.

5. Process according to any one of the claims 1 to 4, characterized in that the light compound or compounds is recovered from the permeate flow by expansion at a pressure $P_3$ below $P_c$, in order to eliminate the supercritical fluid in the gaseous state and separate it from the light compound or compounds remaining in the liquid state.

6. Process according to any one of the claims 1 to 5, characterized in that the nanofiltration membrane is an organomineral membrane having a porous, inorganic substance support coated on one face

   - by a first inorganic material, mesoporous layer with a mean pore radius below 10 nm and
   - a second active layer placed on the first mesoporous layer, having a thickness of 0.1 to 1 $\mu$m and made from organomineral polymer or organic polymer chosen from within the group comprising sulphonated polysulphones, polybenzimidazonones, polyvinylidene fluorides grafted by diaminoethyl methacrylate and perfluorinated ionomers.

7. Process according to any one of the claims 2 to 6, characterized in that the light and heavy compounds are polyethylene glycols with different molecular weights.

8. Process according to any one of the claims 2 to 6, characterized in that the starting phase is butter or a fish oil and in that the compounds to be fractionated are long-chain fatty acids or triglycerides.

**Patentansprüche**

1. Verfahren zur Abtrennung wenigstens einer leichten Verbindung, welche eine Molekülmasse von 50 bis 1000 Dalton hat, von wenigstens einer schweren Verbindung, welche eine höhere Molekülmasse als die leichte Verbindung hat, ausgehend von einer festen oder flüssigen Phase, die sie enthält, dadurch gekennzeichnet, daß es die folgenden Schritte umfaßt:

   a) die genannte feste oder flüssige Phase mit einem überkritischen Fluid bei einem Druck $P_1$, der höher ist als der kritische Druck $P_c$ des Fluids, und bei einer Temperatur $T_1$, die höher ist als die kritische Temperatur $T_c$ des genannten Fluids, in Kontakt zu bringen, um in dieses die schwere(n) und die leichte(n) Verbindung(en) zu extrahieren;
   b) das überkritische Fluid, das die Verbindungen extrahiert hat, einer Filtration auf einer Membran zur Nanofiltration zu unterziehen, wobei man von der anderen Seite der Membran einen Druck $P_2$, der kleiner als $P_1$ und größer als $P_c$ ist, anwendet, um das überkritische Fluid in einen Strom von Retentat, welches an leichter (leichten) Verbindung(en) verarmt ist, und einen Strom von Permeat, welches aus überkritischem, mit leichter (leichten) Verbindung(en) angereichertem Fluid besteht, aufzutrennen;
   c) aus dem Strom des Permeats die leichte(n) Verbindung(en) zu gewinnen.

2. Verfahren nach Anspruch 1, dadurch gekennzeichnet, daß das überkritische Fluid überkritisches $CO_2$ ist.

3. Verfahren nach Anspruch 2, dadurch gekennzeichnet, daß $P_1$ einen Wert hat, der von 7,3 bis 35 MPa geht, und $T_1$ einen Wert hat, der von 31 bis 120°C geht.

4. Verfahren nach einem der Ansprüche 2 und 3, dadurch gekennzeichnet, daß $P_1$ - $P_2$ in dem Intervall liegt, das von 1 bis 5 MPa geht.

5. Verfahren nach einem der Ansprüche 1 bis 4, dadurch gekennzeichnet, daß man die leichte(n) Verbindung(en) aus dem Strom von Permeat durch Entspannung auf einen Druck $P_3$ gewinnt, der kleiner ist als $P_c$, um das überkritische Fluid im gasförmigen Zustand zu entfernen und von der (den) leichten Verbindung(en) abzutrennen, die im flüssigen Zustand bleibt (bleiben).

6. Verfahren nach einem der Ansprüche 1 bis 5, dadurch gekennzeichnet, daß die Membran zur Nanofiltration eine organomineralische Membran ist, die einen porösen Träger aus anorganischer Substanz enthält, der auf einer Seite bedeckt ist

   - mit einer ersten mittelporösen Schicht aus anorganischem Material, die einen mittleren Porenradius kleiner als 10 nm hat, und
   - mit einer zweiten, auf der ersten mittelporösen Schicht angeordneten aktiven Schicht, die eine Dicke von 0,1 bis 1 $\mu$m hat, hergestellt aus organomineralischem Polymer oder aus organischem Polymer, gewählt in der Gruppe, welche die sulfonierten Polysulfone, die Polybensimidazonone, die mit Diaminoethyl-methacrylat gepfropften Polyvinylidenfluoride und die perfluorierten Ionomere umfaßt.

7. Verfahren nach einem der Ansprüche 2 bis 6, dadurch gekennzeichnet, daß die schwere(n) und leichte(n) Verbindung(en) Polyethylenglycole verschiedener Molekülmasse sind.

8. Verfahren nach einem der Ansprüche 2 bis 6, dadurch gekennzeichnet, daß die Ausgangsphase Butter oder ein Fischöl ist und daß die zu fraktionierenden Verbindungen Triglyceride oder Fettsäuren mit langen Ketten sind.